# EUROPÄISCHE PATENTANMELDUNG

(11) **EP 2 078 759 A1**
(43) Veröffentlichungstag der Anmeldung: **15.07.2009**
(21) Anmeldenummer: 09000174.4
(22) Anmeldetag: 08.01.2009
(51) Int. Cl.: C22B 7/00, F27B 7/16, C22B 13/02, C22B 7/04, C22B 9/00, F27B 7/20

(54) **Drehtrommelofen zur Schmelzgewinnung von Schwermetall**

(30) Priorität: 02.02.2008 DE 202008001480 U; 09.01.2008 DE 202008000338 U
(71) Anmelder: SUG Schmelz- und Giessanlagen GmbH & Co. KG, 45701 Herten (DE)
(72) Erfinder: Die Erfindernennung liegt noch nicht vor
(74) Vertreter: Nunnenkamp, Jörg

(57) **Zusammenfassung**

Gegenstand der Erfindung ist die Verwendung eines Drehtrommelofens zur Schmelzgewinnung von Schwermetallen, insbesondere im Zuge eines Schwermetall-Recycling-Prozesses. Der Drehtrommelofen ist mit einer drehbar gelagerten Ofentrommel (2) mit Trommelmantel (3) ausgerüstet. Am Trommelmantel (3) ist wenigstens ein ins Innere der Ofentrommel (2) ragender Rührkörper (8) angeordnet.

## Beschreibung

Die Erfindung betrifft einen Drehtrommelofen zur Schmelzgewinnung von Schwermetallen, insbesondere im Zuge eines Schwermetall-Recycling-Prozesses, mit einer drehbar gelagerten Ofentrommel mit Trommelmantel.

Ein solcher Drehtrommelofen wird beispielhaft in der US 5 470 376 beschrieben. Hier geht es insgesamt um die Rückgewinnung nicht ferromagnetischer Metalle aus Krätze bzw. Metallschlacke. Das hat sich grundsätzlich bewährt, wobei die bekannte Lehre als Wärmequelle für den Schmelzvorgang einen Sauerstoffbrenner einsetzt.

Mit der Bezeichnung Schwermetall wird im Rahmen der vorliegenden Lehre ein Metall hoher Dichte bezeichnet, die allgemein oberhalb von 5 g/cm³ angesiedelt ist. Folglich geht es vorliegend primär um die Gewinnung solcher Metalle wie beispielsweise Chrom, Eisen, Kobalt, Kupfer, Mangan, Molybdän, Nickel, Vanadium, Zink und Zinn, deren Dichte sämtlich sogar oberhalb von 6 g/cm² angesiedelt ist. Ganz besonders bevorzugt ist die Schmelzgewinnung von Blei.

Bekanntermaßen ist Blei aufgrund seiner leichten Verformbarkeit und seines niedrigen Schmelzpunktes von ca. 330 °C eines der am längsten verwendeten Metalle überhaupt. Das resultiert auch aus dem häufigen Vorkommen in der Erdkruste. So wurde schon in der frühen Bronzezeit Blei neben Antimon und Arsen verwendet, um Bronzen zu erzeugen, bis sich Zinn weitgehend durchsetzte. Die Römer verwendeten Blei als Material für Gefäße, als Schleudergeschoss, für Plomben und Wasserleitungen. Heutzutage steht die Menge an gewonnenen Blei bei Nichteisenmetallen an vierter Stelle nach Aluminium, Kupfer und Zink. Das erklärt sich besonders aufgrund der Verwendung von Blei für Autobatterien bzw. Bleiakkumulatoren.

In Deutschland existieren aktuell nur noch zwei Primärhütten, die Blei aus Bleierzen herstellen. Denn die bedeutendste Quelle für Blei stellt heute das Recycling alter Bleiprodukte dar. Hieraus gewinnt man sogenanntes Sekundärblei.

Bereits vor rund 100 Jahren entstanden erste Anlagen für die Rückgewinnung von Blei aus verbrauchten Bleibatterien. Anfangs standen ausnahmslos wirtschaftliche Überlegungen dahinter, denn Blei war und ist ein wertvoller Rohstoff. Mit dem sprunghaften Wachstum des Autoverkehrs rückten in den letzten Jahrzehnten immer stärker ökologische Aspekte in den Vordergrund. Daraus resultiert der heute immer noch gültige Anspruch, Blei zu gebrauchen aber nicht zu verbrauchen.

Die bekannten Vorgehensweisen haben sich bewährt, sind jedoch hinsichtlich ihrer Effektivität verbesserungsfähig. Denn beim Rückgriff auf beispielsweise einen Drehtrommelofen entsprechend der US 5 470 376 für derartige Zwecke ergibt sich das grundsätzliche Problem, dass sich das Einschmelzen von aufzubereitendem Recyclingmaterial, welches das zu gewinnende Schwermetall enthält, relativ zeitintensiv darstellt. Auch ergeben sich durch diesen verzögerten Schmelzprozess Probleme dahingehend, dass manchmal ein Chargiervorgang nicht durchgeführt oder abgebrochen werden muss, weil schlicht und ergreifend die Chargieröffnung durch bisher nicht eingeschmolzene Bestandteile nur zum Teil frei zugänglich ist. Hier will die Erfindung insgesamt Abhilfe schaffen.

Der Erfindung liegt das technische Problem zugrunde, einen derartigen Drehtrommelofen so weiterzuentwickeln, dass der Umschmelzvorgang insgesamt beschleunigt ist und etwaige Probleme beim Chargieren vermieden werden.

Zur Lösung dieser technischen Problemstellung ist Gegenstand der Erfindung die Verwendung eines Drehtrommelofens, mit einer drehbar gelagerten Ofentrommel mit Trommelmantel, wobei am Trommelmantel wenigstens ein ins Innere der Ofentrommel ragender Rührkörper angeordnet ist, zur Schmelzgewinnung von Schwermetallen, insbesondere im Zuge eines Schwermetall-Recycling-Prozesses.

Im Gegensatz zum Stand der Technik nach der US 5 470 376 ist folglich der erfindungsgemäße Drehtrommelofen mit meistens radial ins Innere der Ofentrommel ragenden Rührkörpem ausgerüstet, die zudem so ausgebildet und gestaltet sind, dass sie über eine zumeist realisierte innere Ausmauerung des aus Stahl gefertigten Trommelmantels vorstehen bzw. diese innere Ausmauerung deutlich überragen. Auf diese Weise sind die Rührkörper in der Lage, eine gezielte Rührbewegung und Umwälzung der sich bildenden Schwermetall-Schmelze im Inneren der Ofentrommel zu erzeugen. Als Folge hiervon wird der Schmelzvorgang deutlich beschleunigt. Hierzu trägt auch und insbesondere bei, dass etwaige an der Oberfläche der Metallschmelze schwimmende Bruchstücke des Recyclingmaterials mit Hilfe der Rührkörper in die Schmelze gedrückt werden und auf diese Weise unmittelbar und schneller als bisher in den flüssigen Aggregatzustand überführt werden.

Als weiterer Vorteil ist zu nennen, dass der gewichtsmäßige Anteil an Recyclingmaterial, welches an der Oberfläche der Schmelze schwimmt und diese überragt, gegenüber dem Stand der Technik deutlich verringert ist. Dadurch wird das Abbrennen dieser Schrottmetallteile und folglich die Entstehung von schädlichen Abgasen und auch der Verlust von umzuschmelzendem Schwermetall verringert, welches erfindungsgemäß nicht (mehr) in die dampfförmige Phase überführt wird.

Hierfür sorgt ergänzend die Tatsache, dass die Schmelzgewinnung in der Ofentrommel vorteilhaft in einem Schutzbad erfolgt. Tatsächlich verfügt dieses Schutzbad über eine die Schmelze des Schwermetalles bedeckende Schutzschicht. Diese Schutzschicht mag von einem Salz oder allgemein einem Abdeckmaterial gebildet werden, das zusammen mit dem Recyclingmaterial in den erfindungsgemäßen Drehtrommelofen chargiert wird. Im Falle des Einsatzes von Salz haben sich solche wie Natriumchlorid, Kaliumchlorid etc. als günstig erwiesen. Diese werden meistens als Gemisch hinzugegeben, so dass der Schmelzpunkt des Salzes bzw. allgemein des Abdeckmaterials regelmäßig so eingestellt wird oder werden kann, dass er unterhalb des Schmelzpunktes des Schwermetalls angesiedelt ist.

Da die vorerwähnten Salze bzw. Abdeckmaterialien darüber hinaus über eine geringere Dichte im Vergleich zu den zu umschmelzenden Schwermetallen verfügen, ist gewährleistet, dass die Schmelze aus dem Schwermetall an ihrer Oberfläche mit der gewünschten Schutzschicht bedeckt ist und folglich das Schwermetall einerseits vor Oxidationen schützt und andererseits verhindert, dass die Flamme eines beispielsweise eingesetzten Sauerstoffbrenners die Schmelze erreicht. Bei diesem Sauerstoffbrenner handelt es sich regelmäßig um die erforderliche und ins Innere der Ofentrommel ragende Wärmequelle. Folglich lassen sich etwaige Verluste durch Verdampfen der Schwermetall-Schmelze praktisch ausschließen.

Zudem dient die Schutzschicht bzw. das an dieser Stelle in der Regel eingesetzte Schmelzsalz oder allgemein das Abdeckmaterial ergänzend dazu, im Zuge des Schmelzvorganges entstehende Schlacke aus beispielsweise nicht geschmolzenen Recyclingbestandteilen zu binden. Die Entsorgung der Schlacke bzw. Kränze kann somit zusammen mit der Schutzschicht unschwer erfolgen, indem die Schmelze und die Schutzschicht getrennt voneinander aus dem Drehtrommelofen entfernt bzw. abgestochen werden.

Es hat sich als besonders günstig erwiesen, wenn die Rührkörper eine wendelförmige Anordnung im Vergleich zur Rotationsachse der Ofentrommei aufweisen. In diesem Zusammenhang beschreiben die Rührkörper in der Regel eine Wendelfläche, deren Schrägwinkel im Vergleich zur Rotationsachse von einer Chargieröffnung an einer Stirnseite der Ofentrommel weggeneigt ist. Im Allgemeinen verfügt die Ofentrommel über zwei Öffnungen an ihren beiden Stirnseiten. Dabei ist an der einen Stirnseite die bereits angesprochene Wärmequelle meistens in Verbindung mit einer Absaugeinrichtung angeordnet. Dagegen verfügt die gegenüberliegende Stirnseite über eine Ofentür, welche regelmäßig die bereits angesprochene Chargieröffnung verschließt. Gegenüber dieser Chargieröffnung ist nun die Wendelfläche, welche von den Rührkörpem beschrieben wird, weggeneigt.

Dadurch führt eine Drehbewegung um die Rotationsachse der üblicherweise liegend angeordneten Ofentrommel dazu, dass die Rührkörper in einer gleichsam schraubenden Bewegung das sich an oder in der Nähe der Chargieröffnung anhäufende Recyclingmaterial ins Innere der Ofentrommel und in Richtung auf den Sauerstoffbrenner befördern. Auf diese Weise wird der Chargiervorgang erleichtert und der Schmelzvorgang beschleunigt.

Im Allgemeinen ist der (jeweilige) Rührkörper aus Eisen respektive Stahl gefertigt und verfügt somit über eine Schmelztemperatur von nahezu 1500 °C. Die im Inneren der Ofentrommel umschmelzenden Schwermetalle sind dagegen durchweg mit deutlich geringeren Schmelztemperaturen ausgerüstet, die beispielsweise im Falle von Blei bei ca. 330 °C liegen und lediglich mit Kupfer die Grenze von 1000 °C überschreiten (Schmelzpunkt von Kupfer ca. 1080 °C). Dadurch ist gewährleistet, dass die zu verarbeitenden Schwermetalle immer zuerst schmelzen und der Rührkörper (aus Eisen oder Stahl) nicht oder jedenfalls nicht durch ein eigenes Schmelzen angegriffen wird.

Da als Schmelzsalze in der Regel ternäre Systeme wie Natriumchlorid, Kaliumchlorid und Kaliumflourid eingesetzt werden, stellen sich die Schmelztemperaturen im Bereich von ca. 600 °C ein, sind also üblicherweise unterhalb der Schmelzpunkte der zu umschmelzenden Schwermetalle angesiedelt. Sofern noch niedrigere Schmelzpunkte für das Salz bzw. die Schutzschicht gefordert werden, müssen noch andere Zusammensetzungen des Salzes mit den entsprechenden Eigenschaften gewählt werden. Jedenfalls verfügen die Schwermetalle üblicherweise über einen Schmelzpunkt von deutlich unterhalb 1000 °C, wobei das die Schutzschicht bildende Salz einen demgegenüber nochmals darunter liegenden Schmelzpunkt besitzt. Beide Schmelzpunkte sind weit vom Schmelzpunkt für den Rührkörper entfernt (bei einem Rührkörper aus Stahl nahezu 1.500 °C), so dass die Rührkörper jedenfalls nicht durch An- oder Umschmelzen angegriffen werden und im Übrigen eine geschlossene Schutzschicht zum oberflächenseitigen Abschluss der Schmelze vorliegt, um Oxidationen an dieser Stelle und einen Angriff der Flamme zu verhindern.

Vergleichbare Verhältnisse liegen vor, wenn alternativ zu Eisen bzw. Stahl der Rührkörper aus einem Feuerfestmaterial mit oder ohne Armierung aus vergleichbaren Werkstoffen gefertigt wird. Bei der Armierung mag es sich um ein Stahlkorsett in Gestalt eines Metallgitterkorbes handeln oder aber auch um Stahlnadeln, die in das Feuerfestmaterial eingebracht werden.

Als Feuerfestmaterial können Schamotte, Aluminiumoxide, Karbide, Silikate, Feuerfestbeton oder dergleichen zum Einsatz kommen, die entweder aus einzelnen Steinen aufgebaut sind und mit Hilfe der bereits beschriebenen Armierung zusammengehalten werden und/oder durch Gießen in einer Schalung produziert werden. In jedem Fall sorgt die um die Rotationsachse rotierende und üblicherweise liegend angeordnete Ofentrommel dafür, dass der eine oder die mehreren Rührkörper bei einer Umdrehung der Ofentrommel zweimal die Schutzschicht passieren und hierbei vorteilhaft mit einer Salzumhüllung bzw. allgemein einer Umhüllung aus dem Abdeckmaterial ausgerüstet werden. Diese Umhüllung schützt den jeweiligen Rührkörper bei seiner Passage durch die Schmelze und auch oberhalb der Schmelze vor etwaigen Angriffen seitens einer offenen Flamme der Wärmequelle.

Das heißt, die Beständigkeit der Rührkörper resultiert zum einen aus ihrem Werkstoff und zum anderen aus der durch den beschriebenen Prozess resultierenden temporären Umhüllung mit einer Salzschicht bzw. Schutzschicht.

Wie bereits erläutert ist eine ins Innere der Ofentrommel ragende Wärmequelle in Gestalt beispielsweise eines Sauerstoffbrenners an einer Stirnseite der Ofentrommel realisiert. An dieser Stirnseite mag auch eine Absaugeinrichtung vorgesehen werden, die dazu dient, die im Inneren entstehenden größtenteils giftigen Gase abzuführen, bzw. aufzubereiten. Eine solche Aufbereitung kann dergestalt erfolgen, dass die entstehenden Abgase, in der Regel Gichtgas, durch Zusatz von Sauerstoff nachverbrannt werden, Schlussendlich hat es sich als günstig erwiesen, den Ofen nicht nur mit dem eigentlichen, das Schwermetall enthaltende Recyclingmaterial zu beschicken, sondern ergänzend Zuschlagstoffe vorzusehen. Bei diesen Zuschlagstoffen kann es sich um Kalkstein, Koks, Eisenschrott, Retourschlacke usw. handeln. Tatsächlich fördern die erwähnten Zuschlagsstoffe die Verbrennungs- und Umsetzungsvorgänge im Drehtrommelofen und begünstigen die Befreiung der Schmelze von Verunreinigungen.

Letztendlich wird der beschriebene Drehtrommelofen vorteilhaft zur Schmelzgewinnung der angegebenen Schwermetalle eingesetzt, und zwar insbesondere im Zuge eines Schwermetall-Recycling-Prozesses zur Gewinnung von jeweiligen Sekundär-Schwermetallen. In diesem Zusammenhang zeichnet sich der erfindungsgemäße Drehtrommelofen durch eine im Vergleich zum Stand der Technik geringere Schmelzzeit, eine höhere Ausbeute und reduzierten Anfall an Abgasen aus. Hierin sind die wesentlichen Vorteile zu sehen.

Im Folgenden wird die Erfindung anhand einer lediglich ein Ausführungsbeispiel darstellenden Zeichnung näher erläutert; es zeigen:

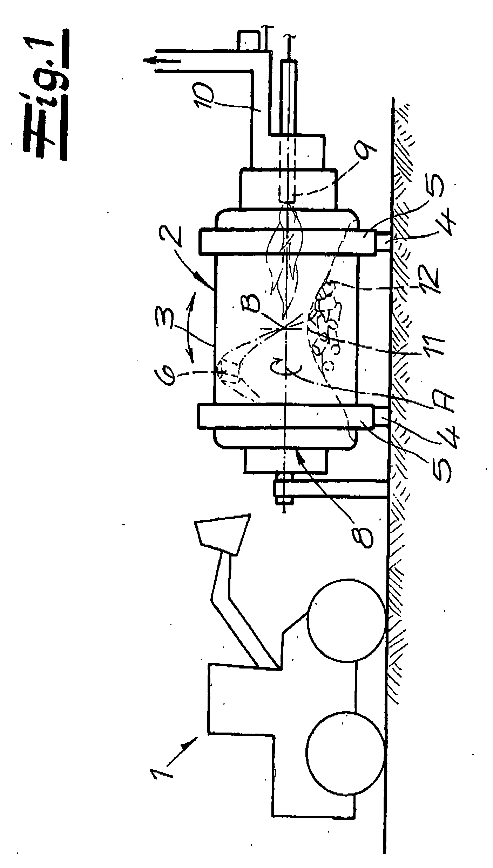

- Fig. 1: den erfindungsgemäßen Drehtrommelofen schematisch und
- Fig. 2: einen Ausschnitt aus Fig. 1 reduziert auf die wesentlichen Bestandteile.

In den Figuren ist ein Drehtrommelofen dargestellt, welcher vorliegend zur Schmelzgewinnung von Schwermetallen eingesetzt wird, und zwar im Zuge eines Schwermetall-Recycling-Prozesses. Bei dem im Beispiel recycelten Schwermetall handelt es sich nicht einschränkend um Blei. Dieses Blei wird aus angeliefertem Recyclingschrott, vorliegend Batterieschrott gewonnen, aus dem zunächst die Altsäure abgetrennt wird. Danach wird dieser Batterieschrott unmittelbar mit Hilfe eines Schaufelladers 1 im Beispielfall in eine drehbar gelagerte und im Ausführungsbeispiel liegend angeordnete Ofentrommel 2 mit Trommelmantel 3 eingefüllt. Vorliegend wird der Batterieschrott als zur Schmelzgewinnung dienendes Recyclingprodukt zusammen mit Zuschlagstoffen für die Beschickung der Ofentrommel 2 genutzt. Bei diesen Zuschlagstoffen handelt es sich beispielsweise um Kalkstein, Koks, Eisenschrott und ggf. so genannte Retourschlacke. Das ist jedoch nicht einschränkend zu verstehen.

Im Ausführungsbeispiel sind der Trommelmantel 3 wie auch die gesamte Ofentrommel 2 insgesamt zylindrisch ausgebildet. Die Ofentrommel 2 rotiert um eine Rotationsachse A und verfügt über eine insgesamt liegende Anordnung. Für den Antrieb der Ofentrommel 2 sorgen Laufrollen 4, die an Laufringen 5 angreifen und so die Drehung um die Rotationsachse A sicher stellen.

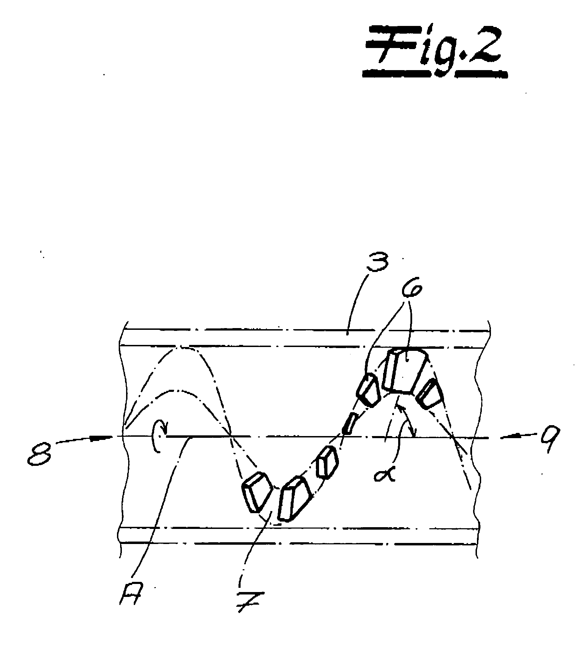

Erfindungsgemäß verfügt der dargestellte Drehtrommelofen über wenigstens einen radial ins Innere der Ofentrommel 2 ragenden Rührkörper 6, welcher am Trommelmantel 3 angeordnet ist. Tatsächlich ist der jeweilige Rührkörper 6 an den Trommelmantel 3 angeschlossen, üblicherweise mit diesem verschraubt. Außerdem sind meistens mehrere über den Umfang des Trommelmantels 3 verteilt angeordnete Rührkörper 6 vorgesehen, wie anhand der Darstellung in Fig. 2 deutlich wird.

Der jeweilige Rührkörper 6 lässt sich hinsichtlich seiner Form und äußeren Topologie praktisch frei wählen, weil es sich vorteilhaft um einen gegossenen Körper handelt, also einen solchen, der durch einen Gießvorgang in einer Gießform erzeugt wird. Meistens wird man an dieser Stelle mit einer mehr oder minder quaderförmigen Gestalt für den Rührkörper 6 arbeiten, der über insgesamt abgerundete Ecken und Kanten verfügt, um möglichst ein Abplatzen durch nicht geschmolzene Schrottbestandtelle zu verhindern. Im Übrigen kann der Rührkörper 6 winkelverstellbar am Trommelmantel 3 festgelegt werden. Das gilt sowohl im Hinblick auf seine radiale Richtung als auch in Bezug auf seine axiale Ausrichtung.

Im Ausführungsbeispiel verfügen die Rührkörper 6 über eine insgesamt wendelförmige Anordnung im Vergleich zur Rotationsachse A der Ofentrommel 2. Dabei beschreiben die Rührkörper 6 eine Wendelfläche 7, welche einen Schrägwinkel α im Vergleich zur Rotationsachse A beschreibt, der die Neigung der Wendelfläche 7 im Vergleich zur Rotationsachse A vorgibt. Der Schrägwinkel α und folglich die Wendelfläche 7 sind dabei im Vergleich zur Rotationsachse A von einer Chargieröffnung 8 an einer Stirnseite der Ofentrommel 2 weggeneigt, und zwar in Richtung auf die der Chargieröffnung 8 gegenüberliegende Stirnseite der Ofentrommel 2.

Die Chargieröffnung 8 findet sich - wie gesagt - an einer Stirnseite der Ofentrommel 2 und ist mit Hilfe einer Ofentür verschlossen. Über die Chargieröffnung 8 wird die Ofentrommel 2 im Beispielfall mit Hilfe des Schaufelladers 1 beschickt. An der gegenüberliegenden Stirnseite der Ofentrommel 2 ist eine Wärmequelle 9 in Gestalt eines Sauerstoffbrenners 9 vorgesehen. Ebenfalls an dieser Stirnseite findet sich eine Absaugeinrichtung 10, die in der Ofentrommel 2 entstehendes Abgas (Gichtgas) entfernt bzw. einer Nachverbrennung zuführt.

Infolge der Schrägneigung der Wendelfläche 7, die von den Rührkörpem 6 beschrieben wird, und zwar in Richtung weg von der Chargieröffnung 8, wird erreicht, dass im Beispielfall der über die Chargieröffnung 8 ins Innere der Ofentrommel 2 zugeführte Batterieschrott inklusive der Zuschlagstoffe unmittelbar ins Innere der Ofentrommel 2 und weg von der Chargieröffnung 8 befördert wird, sobald die Ofentrommel 2 um die Rotationsachse A dreht. Tatsächlich arbeiten die Rührkörper 6 durch ihre Anordnung auf der Wendelfläche 7 ähnlich wie eine Schiffsschraube und sorgen für die Verdrängung des Batterieschrotts im Beispielfall entlang der Rotationsachse A, und zwar in Richtung auf den Sauerstoffbrenner 9.

Es ist auch möglich, dass die Rührkörper 6 zwei verschiedene Wendelflächen 7 beschreiben. Dabei ist die eine Wendelfläche 7 in Richtung weg von der Chargieröffnung 8 geneigt, wohingegen die andere Wendelfläche 7 in Richtung auf die Chargieröffnung 8 geneigt ist. Meistens wird man die Auslegung so treffen, dass entlang der Rotationsachse A zunächst die Wendelfläche 7 mit den weg von der Chargieröffnung 8 geneigten Rührkörpem 6 realisiert wird. Daran anschließend ist dann die Wendelfläche 7 mit den in Richtung auf die Chargieröffnung 8 geneigten Rührkörpem 6 angeordnet. In diesem Zusammenhang kann zwischen den beiden Wendelflächen 7 mit der beschriebenen unterschiedlichen Neigung der Rührkörper 6 ein Freiraum vorhanden sein. Dieser dient dazu, den zugeführten Batterieschrott zu sammeln.

Dabei hat sich eine Auslegung dergestalt als günstig erwiesen, dass die Wendelfläche 7 mit den von der Chargieröffnung 8 weg geneigten Rührkörpem 6 von der Chargieröffnung 8 bis in etwa zur Ofenmitte reicht. Daran anschließend folgt dann die Wendelfläche 7 mit den in Richtung auf die Chargieröffnung 8 geneigten Rührkörpem 6. Im Bereich der Ofenmitte findet also eine Änderung der Transportrichtung für den zugeführten Batterieschrott im Beispielfall statt. Zusätzlich mag in der Ofenmitte der bereits angesprochene Freiraum realisiert sein. Selbstverständlich umfasst die Erfindung auch andere Varianten, also nicht nur eine hälftige Teilung der Ofentrommel 2 entlang der Rotationsachse A in Bezug auf die beschriebenen Wendelflächen 7, sondern es kann auch eine Aufteilung im Sinne von zwei Drittel zu ein Drittel oder auch noch anders erfolgen. In jedem Fall stellt diese spezielle Vorgehensweise sicher, dass sich der Batterieschrott an einer exponierten Stelle entlang der Rotationsachse A im Innem der Ofentrommel 2 sammelt, die mit Hilfe der in diesem Bereich sich ändernden Schrägneigung der Rührkörper 6 der Wendelfläche 7 definiert wird. Dabei liegt die exponierte Stellung vorteilhaft im Innern der Ofentrommel 2 und nicht an seinen Stirnseiten.

Der Rührkörper 6 kann vorliegend aus Eisen oder einem Feuerfestmaterial mit oder ohne Armierung hergestellt sein, wie dies bereits in der Einleitung im Detail beschrieben wurde. Außerdem liegt es im Rahmen der Erfindung, im Inneren der Ofentrommel mit einem Schutzbad zu arbeiten. Dieses verfügt über eine Schutzschicht 11, welche eine Schmelze des Schwermetalles 12 an seiner Oberfläche bedeckt. Lediglich angedeutet ist die Möglichkeit, die gesamte Ofentrommel 2 neigen bzw. kippen zu können, und zwar um eine Achse B, die senkrecht zur Rotationsachse A verläuft. Dadurch können die Schwermetall-Schmelze 12 und auch die Schutzschicht 11 voneinander getrennt und unschwer abgezogen werden.

## Patentansprüche

1. Verwendung eines Drehtrommelofens, mit einer drehbar gelagerten Ofentrommel (2) mit Trommelmantel (3), wobei am Trommelmantel (3) wenigstens ein ins Innere der Ofentrommel (2) ragender Rührkörper (6) angeordnet ist, zur Schmelzgewinnung von Schwermetallen, insbesondere im Zuge eines Schwermetall-Recycling-Prozesses.

2. Verwendung nach Anspruch 1, **dadurch gekennzeichnet, dass** mehrere über den Umfang des Trommelmantels (3) verteilt angeordnete Rührkörper (6) vorgesehen sind.

3. Verwendung nach Anspruch 2, **dadurch gekennzeichnet, dass** die mehreren Rührkörper (6) eine wendelförmige Anordnung im Vergleich zur Rotationsachse (A) der Ofentrommel (2) aufweisen.

4. Verwendung nach Anspruch 3, **dadurch gekennzeichnet, dass** die Rührkörper (6) eine Wendelfläche (7) beschreiben, deren Schrägwinkel α im Vergleich zur Rotationsachse (A) von einer Chargieröffnung (8) an einer Stirnseite der Ofentrommel (2) weggeneigt ist.

5. Verwendung nach einem der Ansprüche 1 bis 4, **dadurch gekennzeichnet, dass** der Rührkörper (6) aus Eisen, einem Feuerfestmaterial mit oder ohne Armierung oder dergleichen gefertigt ist.

6. Verwendung nach einem der Ansprüche 1 bis 5, **dadurch gekennzeichnet, dass** in der Ofentrommel (2) ein Schutzbad mit einer eine Schmelze (12) des Schwermetalles bedeckenden Schutzschicht (11) realisiert ist.

7. Verwendung nach einem der Ansprüche 1 bis 6, **dadurch gekennzeichnet, dass** die Ofentrommel (2) liegend angeordnet ist und sich ggf. um eine zur Rotationsachse (A) senkrechte Achse (B) kippen lässt.

8. Verwendung nach einem der Ansprüche 1 bis 7, **dadurch gekennzeichnet, dass** eine ins Innere der Ofentrommel (2) ragende Wärmequelle (9) in Gestalt beispielsweise eines Sauerstoffbrenners (9) vorgesehen ist.

9. Verwendung nach einem der Ansprüche 1 bis 8, **dadurch gekennzeichnet, dass** eine Absaugeinrichtung (10) zur beispielsweise Nachverbrennung entstehende Abgase, insbesondere Gichtgas, realisiert ist.

10. Verwendung nach einem der Ansprüche 1 bis 9, **dadurch gekennzeichnet, dass** die Ofentrommel (2) mit einem Gemisch aus dem Schwermetall und wenigstens einem Zuschlagstoff beschickt wird.
